(19) Europäisches Patentamt / European Patent Office / Office européen des brevets

(11) **EP 4 354 185 B1**

(12) **EUROPEAN PATENT SPECIFICATION**

(45) Date of publication and mention
of the grant of the patent:
**20.05.2026  Bulletin 2026/21**

(21) Application number: **22851906.2**

(22) Date of filing: **20.07.2022**

(51) International Patent Classification (IPC):
**G02B 3/00** *(2006.01)*    **G01S 7/481** *(2006.01)*
**G02B 27/09** *(2006.01)*    **G02B 27/30** *(2006.01)*

(52) Cooperative Patent Classification (CPC):
**G01S 7/4814; G02B 3/005; G02B 3/06;
G02B 19/0009; G02B 19/0052**

(86) International application number:
**PCT/CN2022/106863**

(87) International publication number:
**WO 2023/011192 (09.02.2023 Gazette 2023/06)**

(54) **LENS, LASER TRANSMISSION SYSTEM, AND ELECTRONIC DEVICE**

LINSE, LASERÜBERTRAGUNGSSYSTEM UND ELEKTRONISCHE VORRICHTUNG

LENTILLE, SYSTÈME DE TRANSMISSION LASER ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.08.2021  CN 202110902254**

(43) Date of publication of application:
**17.04.2024  Bulletin 2024/16**

(73) Proprietor: **Huawei Technologies Co., Ltd.
Longgang
Shenzhen, Guangdong 518129 (CN)**

(72) Inventors:
• **ZHOU, Yong
  Shenzhen, Guangdong 518129 (CN)**
• **JIA, Yuanlin
  Shenzhen, Guangdong 518129 (CN)**
• **CHEN, Hongfu
  Shenzhen, Guangdong 518129 (CN)**

(74) Representative: **Thun, Clemens
  Mitscherlich PartmbB
  Karlstraße 7
  80333 München (DE)**

(56) References cited:
WO-A1-2020/088995     CN-A- 101 201 414
CN-A- 102 017 199     CN-A- 102 301 281
CN-A- 111 103 641     CN-U- 203 930 303
US-A- 5 439 621       US-A1- 2010 033 829
US-A1- 2010 039 819   US-A1- 2014 293 264
US-A1- 2017 314 764   US-A1- 2018 198 254
US-A1- 2019 025 472   US-A1- 2019 257 946
US-B2- 10 293 369

## Description

This application claims priority to Chinese Patent Application No. 202110902254.2, filed on August 6, 2021 and entitled "LENS, LASER TRANSMISSION SYSTEM, AND ELECTRONIC "DEVICE".

## TECHNICAL FIELD

This application relates to the field of laser ranging, and in particular, to a lens, a laser transmission system, and an electronic device.

## BACKGROUND

A laser transmission system is applied to a device with a ranging function, for example, a lidar or a time of flight (time of flight, TOF) camera.

The laser transmission system includes a light source and a lens. The used lens generally includes a collimating lens or an optical diffuser, so that the laser transmission system has high usage of light emitted by the light source, and energy waste is reduced.

During ranging, a precision requirement for a central area of a field of view is high, and a precision requirement for an edge area of the field of view is low. For example, in an autonomous driving vehicle, when the lidar detects a surrounding obstacle, an object close to the central area of the field of view is closer to a height position of the vehicle, and traveling of the vehicle is more likely to be affected. The collimating lens converts a beam into a Gaussian beam, and energy distribution is not centralized. The optical diffuser evenly distributes energy in each area. Both lenses cause energy that does not match the precision requirement to be distributed in the edge area of the field of view, and consequently, usage is still low.

Further, WO 2020/088995 A1 refers to a distance-measuring unit for measuring on the basis of a signal time-of-flight, a distance to an object situated in a detection field, comprising an emitter unit for emitting laser pulses, an optical unit, by which the emitter unit is linked to the detection field, i.e. by which, during operation, the laser pulses are guided into the detection field, and a receiving unit having a sensitive sensor surface for receiving laser pulses reflected by the object, i.e. returning echo pulses, wherein the receiving unit is linked to the detection field via the same optical unit as the emitter unit, i.e., during operation, the echo pulses are guided from the detection field through the optical unit onto the sensor surface.

## SUMMARY

Embodiments of this application provide a lens and a laser transmission system, to overcome a problem that exists in a conventional technology. This problem is solved by the subject matter of the independent claims. Further implementation forms are provided in the dependent claims. Technical solutions are as follows.

According to a first aspect, an embodiment of this application provides a lens. The lens includes a first surface and a second surface that are opposite to each other. The first surface includes a first optical structure. The first optical structure includes at least a plurality of first micro-lenses and a plurality of second micro-lenses. Both the first micro-lens and the second micro-lens are cylindrical lenses. An axial meridian of the first micro-lens is parallel to an axial meridian of the second micro-lens. The first micro-lens and the second micro-lens differ in at least one of the following parameters: a curvature radius; and a clear aperture. The second surface has a second optical structure.

The first optical structure includes the at least the plurality of first micro-lenses and the plurality of second micro-lenses. Both the first micro-lens and the second micro-lens are the cylindrical lenses. The axial meridian of the first micro-lens is parallel to the axial meridian of the second micro-lens. A curvature radius of the first micro-lens is different from a curvature radius of the second micro-lens, and a clear aperture of the first micro-lens is the same as a clear aperture of the second micro-lens; or a curvature radius of the first micro-lens is the same as a curvature radius of the second micro-lens, and a clear aperture of the first micro-lens is different from a clear aperture of the second micro-lens; or a curvature radius of the first micro-lens is different from a curvature radius of the second micro-lens, and a clear aperture of the first micro-lens is also different from a clear aperture of the second micro-lens. Based on the foregoing structure, when the lens is used in the laser transmission system, a beam emitted by a light source irradiates the lens, and when the beam is transmitted by the first optical structure and the second optical structure, energy distribution of the beam in space changes. Under functions of the first optical structure and the second optical structure, the beam finally transmitted by the lens has high luminous intensity in an area close to the middle of a field of view, and has low luminous intensity in an area outside the area, thereby increasing energy of a center of an emergent beam. Therefore, energy distribution of the emergent beam is more adaptable to a device with a ranging function, for example, a lidar or a TOF camera, and energy waste is reduced.

The curvature radius and the clear aperture are two important parameters of a micro-lens. The curvature radius may be adjusted to change a refractive capability of the micro-lens, and the clear aperture may be adjusted to change an amount of light entering the micro-lens. The first micro-lens and the second micro-lens jointly redistribute energy of the beam, so that the energy distribution of the beam is adaptable to a specific application scenario after the beam is transmitted by the lens.

In some examples, the plurality of first micro-lenses are located in the middle of the first surface, and the plurality of second micro-lenses are located on two sides of the plurality of first micro-lenses. The plurality of second micro-lenses are symmetrically distributed on the two sides of the plurality of first micro-lenses, so that the energy distribution of the beam in space is symmetrical after the beam is transmitted by the first optical structure.

In some examples, the first optical structure includes a plurality of first micro-lens groups and a plurality of second micro-lens groups. The first micro-lens group and the second micro-lens group are alternately distributed in a first direction. The first direction is a direction perpendicular to the axial meridian of the first micro-lens. The first micro-lens group includes m first micro-lenses, the second micro-lens group includes n second micro-lenses, and both m and n are positive integers. The first optical structure is a periodic structure. An arrangement manner of the first micro-lens and the second micro-lens may be adjusted to change the periodic structure. The energy distribution of the beam in space may also be adjusted after the beam is transmitted by the lens.

Optionally, a curvature radius of the first micro-lens and a curvature radius of the second micro-lens satisfy the following relationship:

$$0.1 \le \left| R_1 / R_2 \right| \le 10 \, ,$$

where
$R_1$ is the curvature radius of the first micro-lens, and $R_2$ is the curvature radius of the second micro-lens. The curvature radius of the micro-lens may be adjusted to change the refractive capability of the micro-lens. The curvature radius of the first micro-lens and the curvature radius of the second micro-lens are adjusted within a range. In this way, after the beam is transmitted by the lens within a field of view range, the luminous intensity in the area close to a center of the field of view range is significantly higher than the luminous intensity in the area close to an edge of the field of view range.

Optionally, a clear aperture of the first micro-lens and a clear aperture of the second micro-lens satisfy the following relationship:

$$0.1 \le D_1 / D_2 \le 10 \, ,$$

where
$D_1$ is the clear aperture of the first micro-lens, and $D_2$ is the clear aperture of the second micro-lens. The clear aperture of the first micro-lens and the clear aperture of the second micro-lens are adjusted within a range, so that light affected by the first micro-lens and light affected by the second micro-lens are in a specific proportion. An excessively large or excessively small proportion of the light affected by the first micro-lens to the light affected by the second micro-lens may reduce, within the field of view range, the luminous intensity in the area close to the center of the field of view range, and consequently, the energy distribution of the beam is difficult to be adaptable to the specific application scenario.

The second optical structure includes a plurality of third micro-lenses. The third micro-lens is a cylindrical lens. An axial meridian of the third micro-lens is parallel to the axial meridian of the first micro-lens.

After the energy distribution of the beam is adjusted by using the first optical structure, the beam is transmitted by the second optical structure. In the second optical structure, the plurality of third micro-lenses adjust the energy distribution of the beam, so that within the field of view range, the luminous intensity in the area close to the center of the field of view range is high, and the luminous intensity in the area close to the edge of the field of view range is low.

Optionally, a curvature radius of the third micro-lens and the curvature radius of the first micro-lens satisfy the following relationship:

$$0.1 \le \left| R_3 / R_1 \right| \le 10 \, ,$$

where
$R_1$ is the curvature radius of the first micro-lens, and $R_3$ is the curvature radius of the third micro-lens. The curvature radius of the third micro-lens may be adjusted to change the energy distribution of the beam after the beam is transmitted by the lens. When the curvature radius of each micro-lens is adjusted, micro-lenses each are associated with each other, and jointly affect the energy distribution of the beam transmitted by the lens in space. In this way, after the beam is transmitted by the lens within the field of view range, the luminous intensity in the area close to the center of the field of view range is significantly higher than the luminous intensity in the area close to the edge of the field of view range.

Optionally, a clear aperture of the third micro-lens and the clear aperture of the first micro-lens satisfy the following relationship:

$$0.1 \le D_3 / D_1 \le 10 \, ,$$

where
$D_1$ is the clear aperture of the first micro-lens, and $D_3$ is the clear aperture of the third micro-lens. The clear aperture of the third micro-lens may be adjusted to change an amount of light received by the third micro-lens. When the clear aperture of each micro-lens is adjusted, micro-lenses each are associated with each other, and jointly affect the energy distribution of the beam transmitted by the lens in space. In this way, after the beam is transmitted by the lens within the field of view range, the luminous intensity in the area close to the center of the field of view range is significantly higher than the luminous intensity in the area close to the edge of the field of view range.

Optionally, the second optical structure further includes a plurality of fourth micro-lenses. The fourth micro-lens is a cylindrical lens. An axial meridian of the fourth micro-lens is parallel to the axial meridian of the third micro-lens. The curvature radius of the third micro-lens is different from a curvature radius of the fourth micro-lens, and the clear aperture of the third micro-lens is the same as a clear aperture of the fourth micro-lens; or the curvature radius of the third micro-lens is the same as a curvature radius of the fourth micro-lens, and the clear aperture of the third micro-lens is different from a clear aperture of the fourth micro-lens; or the curvature radius of the third micro-lens is different from a curvature radius of the fourth micro-lens, and the clear aperture of the third micro-lens is also different from a clear aperture of the fourth micro-lens. Both the curvature radius and the clear aperture of the third micro-lens and both the curvature radius and the clear aperture of the fourth micro-lens may be adjusted to change the energy distribution of the beam transmitted by the second optical structure in space. The micro-lens of the second optical structure cooperates with the micro-lens of the first optical structure to adjust the energy distribution of the beam in space, so that after the beam is transmitted by the lens within the field of view range, the luminous intensity in the area close to the center of the field of view range is high, and the luminous intensity in the area close to the edge of the field of view range is low.

The plurality of third micro-lenses are located in the middle of the second surface, and the plurality of fourth micro-lenses are located on two sides of the plurality of third micro-lenses. The plurality of fourth micro-lenses are symmetrically distributed on the two sides of the plurality of third micro-lenses. After the beam is transmitted by the first optical structure, the fourth micro-lens adjusts the energy distribution of the beam in space, so that the luminous intensity in the area close to the middle of the field of view is high, and the luminous intensity in the area close to two sides of the field of view is low.

In some examples, the second optical structure includes a plurality of third micro-lens groups and a plurality of fourth micro-lens groups. The third micro-lens group and the fourth micro-lens group are alternately distributed in a second direction. The second direction is a direction perpendicular to the axial meridian of the third micro-lens. The third micro-lens group includes p third micro-lenses, the fourth micro-lens group includes q fourth micro-lenses, and both p and q are positive integers. The second optical structure is also a periodic structure. An arrangement manner of the third micro-lens and the fourth micro-lens may be adjusted to change the periodic structure. The energy distribution of the beam in space may also be adjusted after the beam is transmitted by the lens.

Optionally, the curvature radius of the third micro-lens and the curvature radius of the fourth micro-lens satisfy the following relationship:

$$0.1 \leq |R_3/R_4| \leq 10 \,,$$

where

$R_3$ is the curvature radius of the third micro-lens, and $R_4$ is the curvature radius of the fourth micro-lens. The curvature radius of the fourth micro-lens may be adjusted to change the energy distribution of the beam after the beam is transmitted by the lens. When the curvature radius of each micro-lens is adjusted, micro-lenses each are associated with each other, and jointly affect the energy distribution of the beam transmitted by the lens in space. In this way, after the beam is transmitted by the lens within the field of view range, the luminous intensity in the area close to the center of the field of view range is significantly higher than the luminous intensity in the area close to the edge of the field of view range.

Optionally, the clear aperture of the third micro-lens and the clear aperture of the fourth micro-lens satisfy the following relationship:

$$0.1 \leq D_3/D_4 \leq 10 \,,$$

where

$D_3$ is the clear aperture of the third micro-lens, and $D_4$ is the clear aperture of the fourth micro-lens. The clear aperture of the fourth micro-lens may be adjusted to change an amount of light received by the single fourth micro-lens. When the clear aperture of each micro-lens is adjusted, micro-lenses each are associated with each other, and jointly affect the energy distribution of the beam transmitted by the lens in space. In this way, after the beam is transmitted by the lens within the field of view range, the luminous intensity in the area close to the center of the field of view range is significantly higher than the luminous intensity in the area close to the edge of the field of view range.

The second surface is a convex surface. The second surface includes a middle area, a first slope area, and a second slope area. The first slope area and the second slope area are located on two sides of the middle area. The third micro-lens is located in the middle area.

For a lens with a structure, the curvature radius of each micro-lens and the clear aperture of each micro-lens, and an arrangement manner may be adjusted, to change the energy distribution of the beam in space after the beam is transmitted by the lens. In addition, an included angle between the first slope area and the middle area, and an included angle between the second slope area and the middle area may be adjusted, to change the energy distribution of the beam in space after the beam is transmitted by the lens. The first slope area and the second slope area enable the energy distribution of the beam in space to change more smoothly after the beam is transmitted by the lens, and the luminous intensity gradually changes. A value of the included angle between the first slope area and the middle area and a value of the included angle between the second slope area and the middle area may be adjusted, to change a gradient of the luminous intensity of the beam in space after the beam is transmitted by the lens.

Optionally, the included angle between the second slope area and the middle area is the same as the included angle between the first slope area and the middle area. In this way, when the beam is transmitted from one side on which the second optical structure is located, the energy distribution of the beam within the field of view range is also symmetrical.

Optionally, the lens satisfies the following relational expression:

$$0.3 \le N \times R_1 / [L_1 \times (N-1)];$$

; and

$$0.3 \le N \times R_2 / [L_2 \times (N-1)],$$

where

N is a refractive index of the lens, Li is a thickness of the lens at the first micro-lens, $L_2$ is a thickness of the lens at the second micro-lens, $R_1$ is the curvature radius of the first micro-lens, and $R_2$ is the curvature radius of the second micro-lens. The above relationship enables the thickness of the lens at the first micro-lens, the thickness of the lens at the second micro-lens, the refractive index of the lens, and the curvature radius of the first micro-lens and the curvature radius of the second micro-lens to be associated with each other, and jointly affect the energy distribution of the beam transmitted by the lens in space. In this way, after the beam is transmitted by the lens within the field of view range, the luminous intensity in the area close to the center of the field of view range is significantly higher than the luminous intensity in the area close to the edge of the field of view range.

In some examples, the lens includes a first lens and a second lens. The first lens is disposed opposite to the second lens. A surface that is of the first lens and that is opposite to the second lens is the first surface. A surface that is of the second lens and that is opposite to the first lens is the second surface. The lens can implement a same function as the foregoing lens, and when the lens is used, different first lenses and different second lenses may be selected for combination based on a requirement, so that the energy distribution of the beam satisfies the specific application scenario after the beam is transmitted by the lens.

According to a second aspect, an embodiment of this application further provides a laser transmission system. The laser transmission system includes a light source and the lens in the foregoing aspect. The light source is located on one side that is of a first optical structure of the lens and that is away from a second optical structure.

Based on the foregoing structure, when the beam emitted from the light source is transmitted by the lens, the energy distribution of the beam in space is sequentially adjusted by the first optical structure and the second optical structure, so that within the field of view range, the luminous intensity in the area close to the center of the field of view range is high, and the luminous intensity in the area close to the edge of the field of view range is low. Most energy is centralized in the area close to the center. This helps improve energy usage of the light source and reduce energy waste.

According to a third aspect, an embodiment of this application further provides an electronic device. The electronic device includes the laser transmission system in the second aspect, and a processor. The laser transmission system is used to transmit laser in a target direction. The processor is configured to determine a distance between a target object located in the target direction and the laser transmission system. Because the laser transmission system can centralize the most energy in the area close to the center, the energy usage of the light source is improved, and the energy waste is reduced, to improve a ranging capability of the electronic device.

**BRIEF DESCRIPTION OF DRAWINGS**

FIG. 1 is a schematic diagram of a structure of a lens according to an embodiment of this application;
FIG. 2 is a diagram of a luminous intensity distribution curve of emergent light of a laser transmission system according to an embodiment of this application;
FIG. 3 is a side view of the lens shown in FIG. 1;
FIG. 4 is a schematic diagram of a structure of a cylindrical lens according to an embodiment of this application;
FIG. 5 is a diagram of a luminous intensity distribution curve of emergent light of a laser transmission system according to an embodiment of this application;
FIG. 6 is a schematic diagram of a structure of a lens according to an embodiment of this application;
FIG. 7 is a diagram of a luminous intensity distribution curve of emergent light of a laser transmission system according to an embodiment of this application;
FIG. 8 is a schematic diagram of a structure of a lens according to an embodiment of this application;
FIG. 9 is a diagram of a luminous intensity distribution curve of emergent light of a laser transmission system according to an embodiment of this application;
FIG. 10 is a schematic diagram of a structure of a lens according to an embodiment of this application;
FIG. 11 is a diagram of a luminous intensity distribution curve of emergent light of a laser transmission system according to an embodiment of this application;
FIG. 12 is a schematic diagram of a structure of a lens according to an embodiment of this application;
FIG. 13 is a diagram of a luminous intensity distribution curve of emergent light of a laser transmission system according to an embodiment of this application;
FIG. 14 is a schematic diagram of a structure of a lens according to an embodiment of this application;
FIG. 15 is a diagram of a luminous intensity distribution curve of emergent light of a laser transmission system according to an embodiment of this application; and
FIG. 16 is a schematic diagram of a structure of a laser transmission system according to an embodiment of this application.

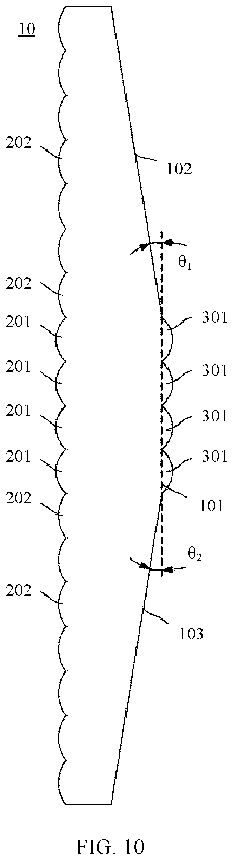

The embodiments related to and illustrated in FIG. 10, 11 and FIG. 14, 15 are embodiments according to the claimed subject-matter.

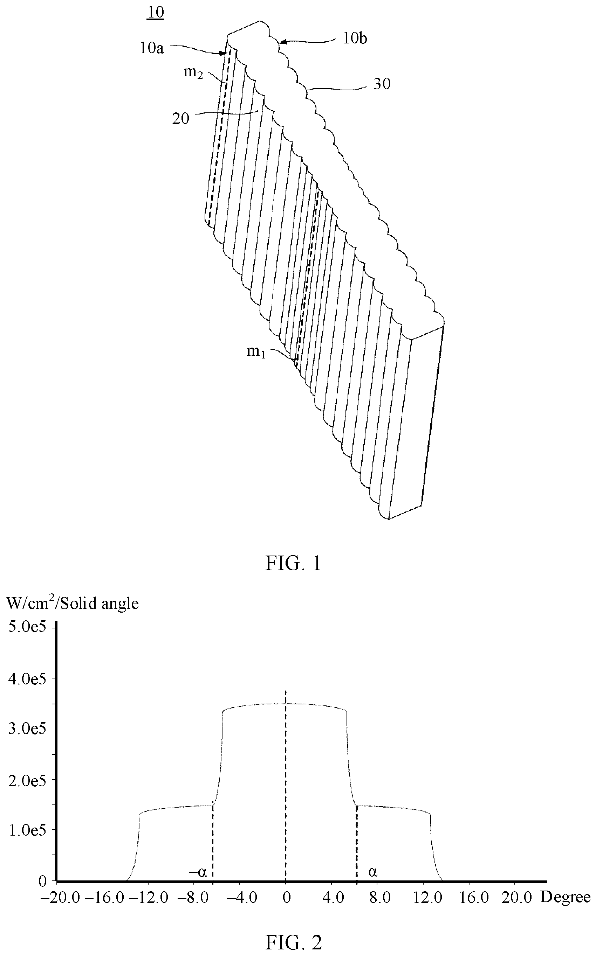

The embodiments related to and illustrated in FIG. 1-9, 12, 13 are embodiments not according to the claimed subject-matter.

## DESCRIPTION OF EMBODIMENTS

FIG. 1 is a schematic diagram of a structure of a lens according to an embodiment of this application. As shown in FIG. 1, a lens 10 includes a first surface 10a and a second surface 10b that are opposite to each other. The first surface 10a has a first optical structure 20, and the second surface 10b has a second optical structure 30.

In embodiments of this disclosure, a beam is modulated by using the first optical structure 20 and the second optical structure 30, and energy distribution of the beam in space is adjusted, so that within a field of view range, luminous intensity in an area close to a center of the field of view range is high, and luminous intensity in an area close to an edge of the field of view range is low. Most energy is centralized in the area close to the center. This helps improve energy usage of a light source and reduce energy waste.

For a device with a ranging function, for example, a lidar or a TOF camera, a laser beam is transmitted to a target object during ranging. The lidar is used as an example. Angular resolutions of the lidar are generally not uniform. A resolution at a position close to the middle of the field of view is high, and a resolution at a position close to two sides of the field of view is low. A higher requirement is imposed on a ranging capability at a position in the middle of the field of view, and a low requirement is imposed at a position on the two sides. The lens mentioned in this embodiment of this application is configured to modulate the beam emitted from the light source, and change the energy distribution of the beam, so that the energy distribution of the beam is more centralized. More energy is centralized at the position close to the middle of the field of view, to reduce the energy waste, improve energy usage, and help improve the ranging capability of the device with the ranging function, for example, the lidar and the TOF camera. FIG. 2 is a diagram of a luminous intensity distribution curve of emergent light of a laser transmission system according to an embodiment of this application. The laser transmission system includes the lens provided in this embodiment of this application. A value on an x-coordinate and a value on a y-coordinate in the figure are merely examples, and are not used to limit a specific value. As shown in FIG. 2, the lens can change luminous intensity in angular space, so that luminous intensity inside an angle range of a first angle $\alpha$ in front of the laser transmission system is greater than luminous intensity outside the angle range of the first angle $\alpha$.

A value of the first angle $\alpha$ is determined based on different application scenarios. For different laser transmission systems, values of the first angle $\alpha$ may be different due to different use scenarios. For example, for a laser transmission system in a laser radar, the first angle $\alpha$ may be 10°. For another laser transmission system in the laser radar, the first angle $\alpha$ may be 14°.

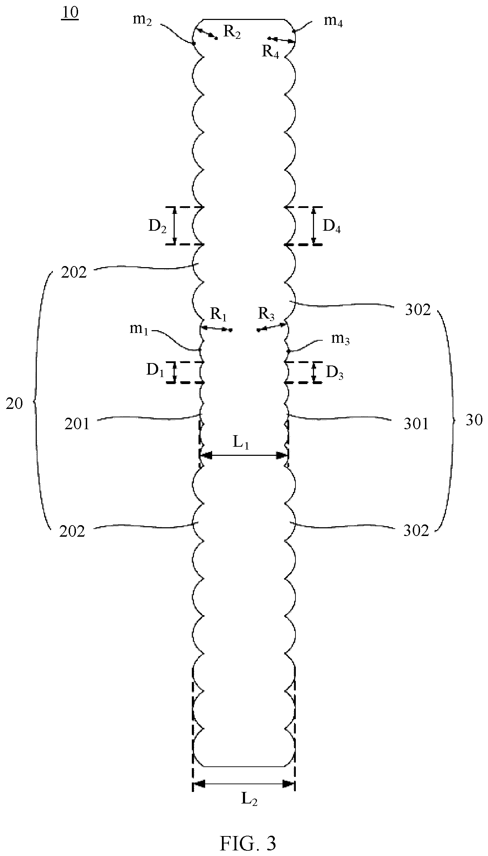

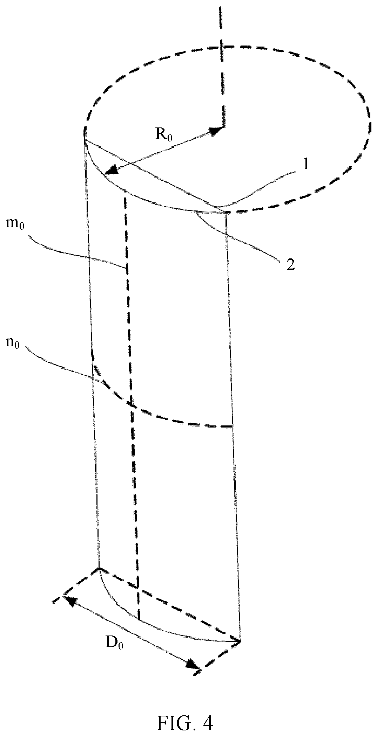

The first optical structure 20 includes two different types of micro-lenses. FIG. 3 is a side view of the lens shown in FIG. 1. As shown in FIG. 1 and FIG. 3, the first optical structure 20 includes a plurality of first micro-lenses 201 and a plurality of second micro-lenses 202. Both the first micro-lens 201 and the second micro-lens 202 are cylindrical lenses. An axial meridian $m_1$ of the first micro-lens 201 is parallel to an axial meridian $m_2$ of the second micro-lens 202. FIG. 4 is a schematic diagram of a structure of a cylindrical lens according to an embodiment of this application. As shown in FIG. 4, the cylindrical lens includes a rectangular plane 1 and a curved surface 2. The curved surface 2 is a part of a cylindrical surface. The cylindrical lens includes an axial meridian $m_0$ and a refractive power meridian $n_0$. The axial meridian $m_0$ is a meridian parallel to a central axis of the cylindrical surface in the curved surface 2. The refractive power meridian $n_0$ is an intersection line between a plane perpendicular to the central axis of the cylindrical surface and the curved surface 2, and is an arc curve. The axial meridian $m_0$ is perpendicular to the refractive power meridian $n_0$. An axial meridian $m_1$ of one first micro-lens 201 and an axial meridian $m_2$ of one second micro-lens 202 are shown in the figure. Both the axial meridian $m_1$ and the axial meridian $m_2$ are perpendicular to a direction shown in the figure.

A cross section of the cylindrical lens is an arch shape. A curvature radius $R_0$ of the cylindrical lens is a radius of the arc curve in the cross section of the cylindrical lens. A clear aperture $D_0$ of the cylindrical lens is a length of a line segment in the cross section of the cylindrical lens. The first micro-lens 201 and the second micro-lens 202 are two different types of micro-lenses, which means that the first micro-lens 201 and the second micro-lens 202 differ in at least one of two parameters: a curvature radius and a clear aperture. In some examples, a curvature radius $R_1$ of the first micro-lens 201 is different from a curvature radius $R_2$ of the second micro-lens 202, and a clear aperture $D_1$ of the first micro-lens 201 is the same as a clear aperture $D_2$ of the second micro-lens 202. In some examples, a curvature radius $R_1$ of the first micro-lens 201 is the same as a curvature radius $R_2$ of the second micro-lens 202, and a clear aperture $D_1$ of the first micro-lens 201 is different from a clear aperture $D_2$ of the second micro-lens 202. In some examples, a curvature radius $R_1$ of the first micro-lens 201 is different from a curvature radius $R_2$ of the second micro-lens 202, and a clear aperture $D_1$ of the first micro-lens 201 is also different from a clear aperture $D_2$ of the second micro-lens 202.

A focal length of a micro-lens varies with the curvature radius of the micro-lens, and deflection of a propagation direction of light when the light is transmitted by the micro-lens is also different. When a beam irradiates the lens, wavefront is spatially divided into a plurality of micro-parts by a plurality of micro-lens, and the plurality of micro-parts separately enter a corresponding micro-lens. A larger clear aperture of the micro-lens indicates that more light enters the micro-lens, and a smaller clear aperture of the micro-lens indicates that less light enters the micro-lens. The clear aperture of the first micro-lens 201 is different from the clear aperture of the second micro-lens 202. Therefore, light that enters the first micro-lens 201 and that is modulated by the first micro-lens 201 is different from light that enters the second micro-lens 202 and that is modulated by the second micro-lens 202. Both the curvature radius and the clear aperture of the first micro-lens 201 and both the curvature radius and the clear aperture of the second micro-lens 202 may be adjusted to change energy distribution of a beam transmitted by the first optical structure 20 in space. The energy distribution of the beam transmitted by the lens in space is finally adjusted, so that after the beam is transmitted by the lens within a field of view range, luminous intensity in an area close to a center of the field of view range is high, and luminous intensity in an area close to an edge of the field of view range is low. Moreover, an energy centralized degree can be adjusted, so that the energy distribution of the beam is adaptable to a specific application scenario after the beam is transmitted by the lens.

In some examples, the curvature radius of the first micro-lens 201 and the curvature radius of the second micro-lens 202 satisfy the following relationship:

$$0.1 \le \left| R_1 / R_2 \right| \le 10 \quad (1),$$

where
$R_1$ is the curvature radius of the first micro-lens 201, and $R_2$ is the curvature radius of the second micro-lens 202.

The curvature radius of the micro-lens may be adjusted to change a deflection degree of the propagation direction of the beam when the beam is transmitted by the micro-lens. The curvature radius $R_1$ of the first micro-lens 201 and the curvature radius $R_2$ of the second

micro-lens 202 are adjusted within a range. In this way, after the beam is transmitted by the lens within the field of view range, the luminous intensity in the area close to the center of the field of view range is significantly higher than the luminous intensity in the area close to the edge of the field of view range.

Optionally, the clear aperture of the first micro-lens 201 and the clear aperture of the second micro-lens 202 satisfy the following relationship:

$$0.1 \le D_1 / D_2 \le 10 \quad (2),$$

where
$D_1$ is the clear aperture of the first micro-lens 201, and $D_2$ is the clear aperture of the second micro-lens 202.

The clear aperture of the micro-lens may be adjusted to change an amount of light affected by the micro-lens. The clear aperture $D_1$ of the first micro-lens 201 and the clear aperture $D_2$ of the second micro-lens 202 are adjusted within a range, so that light affected by the first micro-lens 201 and light affected by the second micro-lens 202 are in a specific proportion. After the beam is transmitted by the lens within the field of view range, the luminous intensity in the area close to the center of the field of view range is significantly higher than the luminous intensity in the area close to the edge of the field of view range. An excessively large or excessively small proportion of the light affected by the first micro-lens 201 to the light affected by the second micro-lens 202 may reduce, within the field of view range, the luminous intensity in the area close to the center of the field of view range, and consequently, the energy distribution of the beam is difficult to be adaptable to the specific application scenario.

As shown in FIG. 3, the second optical structure 30 includes a plurality of third micro-lenses 301. The third micro-lens 301 is a cylindrical lens. An axial meridian $m_3$ of the third micro-lens 301 is parallel to the axial meridian $m_1$ of the first micro-lens 201.

The beam is emitted into the lens from one side on which the first optical structure 20 of the lens is located. After the energy distribution of the beam is adjusted by using the first optical structure 20, the beam is transmitted by the second optical structure 30. In the second optical structure 30, the plurality of third micro-lenses 301 adjust the energy distribution of the beam, so that within the field of view range, the luminous intensity in the area close to the center of the field of view range is high, and the luminous intensity in the area close to the edge of the field of view range is low.

In some examples, a curvature radius of the third micro-lens 301 and the curvature radius of the first micro-lens 201 satisfy the following relationship:

$$0.1 \le \left| R_3 / R_1 \right| \le 10 \quad (3),$$

where

$R_1$ is the curvature radius of the first micro-lens 201, and $R_3$ is the curvature radius of the third micro-lens 301.

The curvature radius of the third micro-lens 301 may be adjusted to change the energy distribution of the beam after the beam is transmitted by the lens. When the curvature radius of each micro-lens is adjusted, the curvature radius $R_1$ of the first micro-lens 201, the curvature radius $R_2$ of the second micro-lens 202, and the curvature radius $R_3$ of the third micro-lens 301 are associated with each other, and jointly affect the energy distribution of the beam transmitted by the lens in space. In this way, after the beam is transmitted by the lens within the field of view range, the luminous intensity in the area close to the center of the field of view range is significantly higher than the luminous intensity in the area close to the edge of the field of view range.

Optionally, a clear aperture of the third micro-lens 301 and the clear aperture of the first micro-lens 201 satisfy the following relationship:

$$0.1 \le D_3/D_1 \le 10 \quad (4),$$

where

$D_1$ is the clear aperture of the first micro-lens 201, and $D_3$ is the clear aperture of the third micro-lens 301.

The clear aperture $D_3$ of the third micro-lens 301 may be adjusted to change an amount of light received by the single third micro-lens 301. When the clear aperture of each micro-lens is adjusted, the clear aperture $D_1$ of the first micro-lens 201, the clear aperture $D_2$ of the second micro-lens 202, and the clear aperture $D_3$ of the third micro-lens 301 are associated with each other, and jointly affect the energy distribution of the beam transmitted by the lens in space. In this way, after the beam is transmitted by the lens within the field of view range, the luminous intensity in the area close to the center of the field of view range is significantly higher than the luminous intensity in the area close to the edge of the field of view range.

When the second optical structure 30 includes the third micro-lens 301, the plurality of third micro-lenses 301 may cover the second surface 10b of the lens 10. In other examples, the second optical structure 30 may alternatively include two different types of micro-lenses.

As shown in FIG. 3, the second optical structure 30 also includes a plurality of fourth micro-lenses 302. The fourth micro-lens 302 is also a cylindrical lens. An axial meridian $m_4$ of the fourth micro-lens 302 is parallel to the axial meridian $m_3$ of the third micro-lens 301.

The third micro-lens 301 and the fourth micro-lens 302 are two different types of micro-lenses, which means that the third micro-lens 301 and the fourth micro-lens 302 differ in the at least one of two parameters: the curvature radius and the clear aperture. In some examples, the curvature radius $R_3$ of the third micro-lens 301 is different from a curvature radius $R_4$ of the fourth micro-lens 302, and the clear aperture $D_3$ of the third micro-lens 301 is the same as a clear aperture $D_4$ of the fourth micro-lens 302. In some examples, the curvature radius $R_3$ of the third micro-lens 301 is the same as a curvature radius $R_4$ of the fourth micro-lens 302, and the clear aperture $D_3$ of the third micro-lens 301 is different from a clear aperture $D_4$ of the fourth micro-lens 302. In some examples, the curvature radius $R_3$ of the third micro-lens 301 is different from a curvature radius $R_4$ of the fourth micro-lens 302, and the clear aperture $D_3$ of the third micro-lens 301 is also different from a clear aperture $D_4$ of the fourth micro-lens 302.

The curvature radius and the clear aperture of the third micro-lens 301 and the curvature radius and the clear aperture of the fourth micro-lens 302 may be adjusted to change energy distribution of a beam transmitted by the second optical structure 30 in space. The third micro-lens 301 and the fourth micro-lens 302 that are in the second optical structure 30 cooperate with the first micro-lens 201 and the second micro-lens 202 that are in the first optical structure 20, to adjust the energy distribution of the beam in space, so that after the beam is transmitted by the lens within the field of view range, the luminous intensity in the area close to the center of the field of view range is high, and the luminous intensity in the area close to the edge of the field of view range is low.

In some examples, the curvature radius of the third micro-lens 301 and the curvature radius of the fourth micro-lens 302 satisfy the following relationship:

$$0.1 \le |R_3/R_4| \le 10 \quad (5),$$

where

$R_3$ is the curvature radius of the third micro-lens 301, and $R_4$ is the curvature radius of the fourth micro-lens 302.

The curvature radius $R_4$ of the fourth micro-lens 302 may be adjusted to change the energy distribution of the beam after the beam is transmitted by the lens. When the curvature radius of each micro-lens is adjusted, the curvature radius $R_1$ of the first micro-lens 201, the curvature radius $R_2$ of the second micro-lens 202, the curvature radius $R_3$ of the third micro-lens 301, and the curvature radius $R_4$ of the fourth micro-lens 302 are associated with each other, and jointly affect the energy distribution of the beam transmitted by the lens in space. In this way, after the beam is transmitted by the lens within the field of view range, the luminous intensity in the area close to the center of the field of view range is significantly higher than the luminous intensity in the area close to the edge of the field of view range.

Optionally, the clear aperture of the third micro-lens 301 and the clear aperture of the fourth micro-lens 302 satisfy the following relationship:

$$0.1 \le D_3/D_4 \le 10 \quad (6),$$

where

$D_3$ is the clear aperture of the third micro-lens 301, and $D_4$ is the clear aperture of the fourth micro-lens 302.

The clear aperture $D_4$ of the fourth micro-lens 302 may be adjusted to change an amount of light received by the single fourth micro-lens 302. When the clear aperture of each micro-lens is adjusted, the clear aperture $D_1$ of the first micro-lens 201, the clear aperture $D_2$ of the second micro-lens 202, the clear aperture $D_3$ of the third micro-lens 301, and the clear aperture $D_4$ of the fourth micro-lens 302 are associated with each other, and jointly affect the energy distribution of the beam transmitted by the lens in space. In this way, after the beam is transmitted by the lens within the field of view range, the luminous intensity in the area close to the center of the field of view range is significantly higher than the luminous intensity in the area close to the edge of the field of view range.

To further adjust the energy distribution of the beam in space after the beam is transmitted by the lens, the lens further satisfies at least one of the following relationships:

$$0.3 \le N \times R_1 / [L_1 \times (N-1)] \quad (7)$$

; and

$$0.3 \le N \times R_2 / [L_2 \times (N-1)] \quad (8),$$

where
N is a refractive index of the lens, $L_1$ is a thickness of the lens at the first micro-lens 201, $L_2$ is a thickness of the lens at the second micro-lens 202, $R_1$ is the curvature radius of the first micro-lens 201, and $R_2$ is the curvature radius of the second micro-lens 202.

As shown in FIG. 3, the thickness $L_1$ of the lens at the first micro-lens 201 is a distance between a common tangent plane of a plurality of first micro-lenses 201 and a common tangent plane of the plurality of third micro-lenses 201. The thickness $L_2$ of the lens at the second micro-lens 202 is a distance between a common tangent plane of a plurality of second micro-lenses 202 and a common tangent plane of the plurality of fourth micro-lenses 302. The above relationship defines a relationship between the thickness of the lens at the first micro-lens 201, the thickness of the lens at the second micro-lens 202, the refractive index of the lens, and the curvature radius of the first micro-lens 201 and the curvature radius of the second micro-lens 202, so that the thickness of the lens at the first micro-lens 201, the thickness of the lens at the second micro-lens 202, the refractive index of the lens, and the curvature radius of the first micro-lens 201 and the curvature radius of the second micro-lens 202 are associated with each other, and jointly affect the energy distribution of the beam transmitted by the lens in space. In this way, after the beam is transmitted by the lens within the field of view range, the luminous intensity in the area close to the center of the field of view range is significantly higher than the luminous intensity in the area close to the edge of the field of view range.

In addition, the curvature radius and the clear aperture of the first micro-lens 201, the curvature radius and the clear aperture of the second micro-lens 202, both the curvature radius and the clear aperture of the third micro-lens 301, and the curvature radius and the clear aperture of the fourth micro-lens 302 may be adjusted, to change the energy distribution of the beam in space after the beam is transmitted by the lens. An arrangement manner of the first micro-lens 201 and the second micro-lens 202 on the first surface 10a of the lens 10, and an arrangement manner of the third micro-lens 301 and the fourth micro-lens 302 on the second surface 10b of the lens 10 may also be adjusted to change the energy distribution of the beam in space after the beam is transmitted by the lens.

For example, in FIG. 3, the plurality of first micro-lenses 201 are located in the middle of the first surface 10a of the lens 10, and the plurality of second micro-lenses 202 are located on two sides of the plurality of first micro-lenses 201.

The plurality of second micro-lenses 202 are symmetrically distributed on the two sides of the plurality of first micro-lenses 201, so that the energy distribution of the beam in space is symmetrical after the beam is transmitted by the first optical structure 20.

A total width of the distributed plurality of first micro-lenses 201 may affect luminous intensity inside an angle range of the first angle $\alpha$ in front of a laser transmission system after the beam is transmitted by the lens, increase the total width of the distributed plurality of first micro-lenses 201, and increase the luminous intensity inside the angle range of the first angle $\alpha$.

As shown in FIG. 3, the plurality of third micro-lenses 301 are located in the middle of the second surface 10b, and the plurality of fourth micro-lenses 302 are located on two sides of the plurality of third micro-lenses 301.

The plurality of fourth micro-lenses 302 are symmetrically distributed on the two sides of the plurality of third micro-lenses 301. After the beam is transmitted by the first optical structure 20, the fourth micro-lens 302 adjusts the energy distribution of the beam in space, so that the luminous intensity in the area close to the middle of the field of view is high, and the luminous intensity in the area close to two sides of the field of view is low.

As an example, in this embodiment of this application, the curvature radius $R_1$ of the first micro-lens 201 is 0.65 mm, and the clear aperture $D_1$ of the first micro-lens 201 is 0.26 mm. The curvature radius $R_2$ of the second micro-lens 202 is 0.7 mm, and the clear aperture $D_2$ of the second micro-lens 202 is 0.61 mm. A ratio of the curvature radius $R_1$ of the first micro-lens 201 to the curvature radius $R_2$ of the second micro-lens 202 is 0.93, and a ratio of the clear aperture $D_1$ of the first micro-lens 201 to the clear aperture $D_2$ of the second

micro-lens 202 is 0.42. In addition, the following relationship is met:

$$N \times R_1 / [L_1 \times (N-1)] = 0.72 \quad (9);$$

and

$$N \times R_2 / [L_2 \times (N-1)] = 0.72 \quad (10),$$

where

N is a refractive index of the lens, $L_1$ is a thickness of the lens at the first micro-lens 201, and $L_2$ is a thickness of the lens at the second micro-lens 202.

The curvature radius $R_3$ of the third micro-lens 301 is 0.65 mm, and the clear aperture $D_3$ of the third micro-lens 301 is 0.26 mm. The curvature radius $R_3$ of the third micro-lens 301 and the clear aperture $D_3$ of the third micro-lens 301 are respectively the same as the curvature radius $R_1$ of the first micro-lens 201 and the clear aperture $D_1$ of the first micro-lens 201. The curvature radius $R_4$ of the fourth micro-lens 302 is 0.7 mm, and the clear aperture $D_4$ of the fourth micro-lens 302 is 0.61 mm. The curvature radius $R_4$ of the fourth micro-lens 302 and the clear aperture $D_4$ of the fourth micro-lens 302 are respectively the same as the curvature radius $R_2$ of the second micro-lens 202 and the clear aperture $D_2$ of the second micro-lens 202.

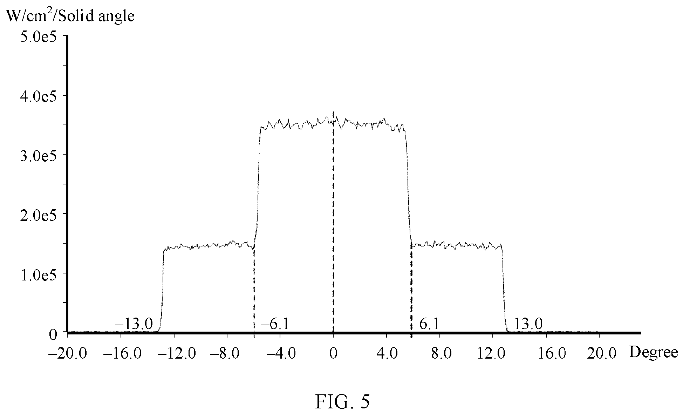

FIG. 5 is a diagram of a luminous intensity distribution curve of emergent light of a laser transmission system according to an embodiment of this application. The laser transmission system includes the lens shown in FIG. 3. A divergent beam is incident from one side on which the first optical structure 20 is located and is emitted from one side on which the second optical structure 30 is located. As shown in FIG. 5, after the beam is transmitted by the lens, energy is distributed within an angle range of 13° in front of the laser transmission system, and luminous intensity inside an angle range of 6.1° in front of the laser transmission system is significantly greater than luminous intensity outside the angle range of 6.1° in front of the laser transmission system. A ratio of a central field of view to a full field of view is 0.47. The full field of view herein is an angle range irradiated by the beam after the beam is transmitted by the lens. The central field of view is, after the beam is transmitted by the lens within a range of the full field of view, an angle range in which luminous intensity is significantly higher than luminous intensity inside an angle range of another area. In this example, after the beam is transmitted by the lens, the energy is distributed within the angle range of 13° in front of the laser transmission system. In this embodiment of this application, for example, an offset of a field of view is 0°, that is, a field of view is symmetrical. Therefore, the beam irradiates in a range of 26°, that is, the full field of view is 26°. Because the luminous intensity inside the angle range of 6.1° in front of the laser transmission system is significantly greater than the luminous intensity outside the angle range of 6.1° in front of the laser transmission system, the central field of view is 12.2°. Energy in the central field of view accounts for 42% of total energy.

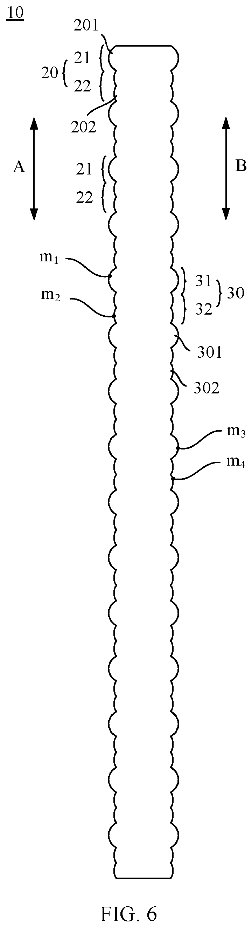

FIG. 6 is a schematic diagram of a structure of a lens according to an embodiment of this application. In the lens, the first optical structure 20 is a periodic structure. As shown in FIG. 6, in the lens, the first optical structure 20 includes a plurality of first micro-lens groups 21 and a plurality of second micro-lens groups 22. The first micro-lens group 21 and the second micro-lens group 22 are alternately distributed in a first direction A. The first direction A is a direction perpendicular to the axial meridian $m_1$ of the first micro-lens 201.

In this example, the first micro-lens group 21 includes one first micro-lens 201, and the second micro-lens group 22 includes two second micro-lenses 202. Each period of the first optical structure 20 includes one first micro-lens 201 and two second micro-lenses 202.

On the first surface 10a of the lens 10, the axial meridian $m_1$ of the first micro-lens 201 is parallel to an axial meridian $m_2$ of the second micro-lens 202, and the first micro-lens 201 and the second micro-lens 202 are arranged in the periodic structure in the first direction A. Without changing a curvature radius and a clear aperture of the first micro-lens 201 and a curvature radius and a clear aperture of the second micro-lens 202, an arrangement manner of the first micro-lens 201 and the second micro-lens 202 may be adjusted to change the periodic structure. Energy distribution of the beam in space may also be adjusted after the beam is transmitted by the lens.

As shown in FIG. 6, the second optical structure 30 is also a periodic structure. The second optical structure 30 includes a plurality of third micro-lens groups 31 and a plurality of fourth micro-lens groups 32. The third micro-lens group 31 and the fourth micro-lens group 32 are alternately distributed in a second direction B. The second direction B is a direction perpendicular to the axial meridian $m_3$ of the third micro-lens 301.

In this example, the third micro-lens group 31 includes one third micro-lens 301, and the fourth micro-lens group 32 includes two fourth micro-lenses 302. Each period of the second optical structure 30 includes one third micro-lens 301 and two fourth micro-lenses 302.

On the second surface 10b of the lens 10, the axial meridian $m_3$ of the third micro-lens 301 is parallel to the axial meridian $m_4$ of the fourth micro-lens 302, and the third micro-lens 301 and the fourth micro-lens 302 are arranged in the periodic structure in the second direction B. Without changing a curvature radius and a clear aperture of the third micro-lens 301 and a curvature radius and a clear aperture of the fourth micro-lens 302, an arrangement manner of the third micro-lens 301 and the fourth micro-lens 302 may be adjusted to change the periodic structure. Energy distribution of the beam in space may also be adjusted after the beam is transmitted by the lens.

As an example, in this embodiment of this ap-

plication, the curvature radius $R_1$ of the first micro-lens 201 is 0.5 mm, and the clear aperture $D_1$ of the first micro-lens 201 is 0.39 mm. The curvature radius $R_2$ of the second micro-lens 202 is 0.5 mm, and the clear aperture $D_2$ of the second micro-lens 202 is 0.18 mm. A ratio of the curvature radius $R_1$ of the first micro-lens 201 to the curvature radius $R_2$ of the second micro-lens 202 is 1, and a ratio of the clear aperture $D_1$ of the first micro-lens 201 to the clear aperture $D_2$ of the second micro-lens 202 is 2.17. In addition, the following relationship is met:

$$N \times R_1 / [L_1 \times (N-1)] = 0.82 \quad (11);$$

and

$$N \times R_2 / [L_2 \times (N-1)] = 0.82 \quad (12),$$

where

N is a refractive index of the lens, $L_1$ is a thickness of the lens at the first micro-lens 201, and $L_2$ is a thickness of the lens at the second micro-lens 202.

The curvature radius $R_3$ of the third micro-lens 301 is 0.5 mm, and the clear aperture $D_3$ of the third micro-lens 301 is 0.39 mm. The curvature radius $R_3$ of the third micro-lens 301 and the clear aperture $D_3$ of the third micro-lens 301 are respectively the same as the curvature radius $R_1$ of the first micro-lens 201 and the clear aperture $D_1$ of the first micro-lens 201. The curvature radius $R_4$ of the fourth micro-lens 302 is 0.5 mm, and the clear aperture $D_4$ of the fourth micro-lens 302 is 0.18 mm. The curvature radius $R_4$ of the fourth micro-lens 302 and the clear aperture $D_4$ of the fourth micro-lens 302 are respectively the same as the curvature radius $R_2$ of the second micro-lens 202 and the clear aperture $D_2$ of the second micro-lens 202.

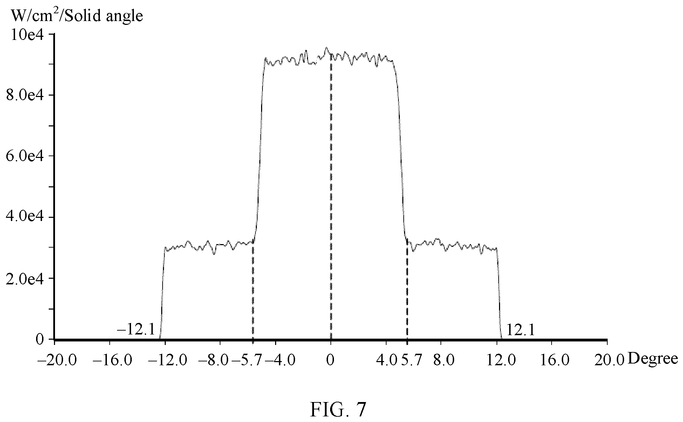

FIG. 7 is a diagram of a luminous intensity distribution curve of emergent light of a laser transmission system according to an embodiment of this application. The laser transmission system includes the lens shown in FIG. 6. A divergent beam is incident from one side on which the first optical structure 20 is located and is emitted from one side on which the second optical structure 30 is located. As shown in FIG. 7, after the beam is transmitted by the lens, energy is distributed within an angle range of 12.1° in front of the laser transmission system, and luminous intensity inside an angle range of 5.7° in front of the laser transmission system is significantly greater than luminous intensity outside the angle range of 5.7° in front of the laser transmission system. A full field of view is 24.2°, a central field of view is 11.4°, and a ratio of the central field of view to the full field of view is 0.47. Energy in the central field of view accounts for 62% of total energy.

In another example, each period of the first optical structure 20 may alternatively include another quantity of first micro-lenses 201 and second micro-lenses 202. Each period of the second optical structure 30 may alternatively include another quantity of third micro-lenses 301 and fourth micro-lenses 302.

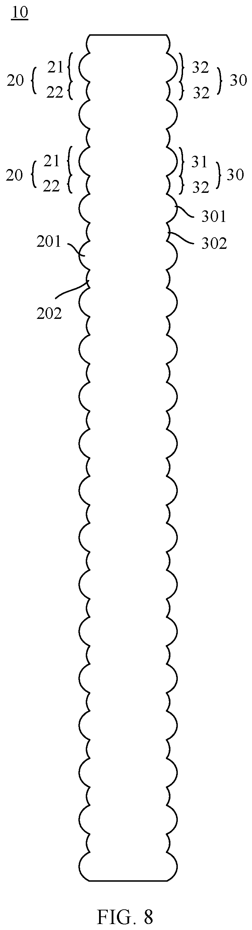

For example, FIG. 8 is a schematic diagram of a structure of a lens according to an embodiment of this application. As shown in FIG. 8, in the lens, each period of the first optical structure 20 includes one first micro-lens 201 and one second micro-lens 202. Each period of the second optical structure 30 includes one third micro-lens 301 and one fourth micro-lens 302. In the lens, a curvature radius and a clear aperture of the first micro-lens 201, a curvature radius and a clear aperture of the second micro-lens 202, a curvature radius and a clear aperture of the third micro-lens 301, and a curvature radius and a clear aperture of the fourth micro-lens 302 are all the same as the lens shown in FIG. 6, and also satisfy a relational expression (11) and a relational expression (12).

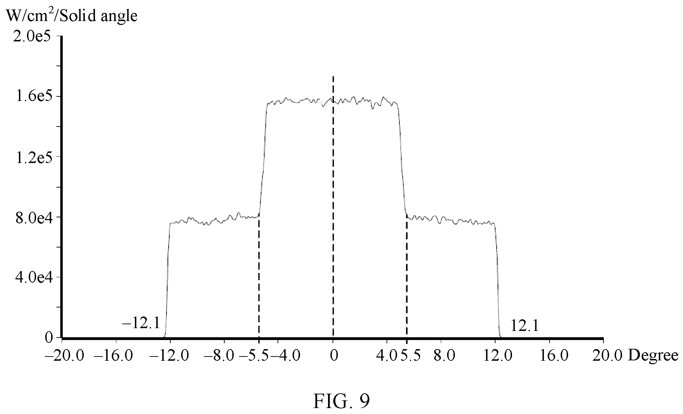

FIG. 9 is a diagram of a luminous intensity distribution curve of emergent light of a laser transmission system according to an embodiment of this application. The laser transmission system includes the lens shown in FIG. 8. A divergent beam is incident from one side on which the first optical structure 20 is located and is emitted from one side on which the second optical structure 30 is located. As shown in FIG. 9, after the beam is transmitted by the lens, energy is distributed within an angle range of 12.1° in front of the laser transmission system, and luminous intensity inside an angle range of 5.5° in front of the laser transmission system is significantly greater than luminous intensity outside the angle range of 5.5° in front of the laser transmission system. A full field of view is 24.2°, a central field of view is 11°, and a ratio of the central field of view to the full field of view is 0.45. Energy in the central field of view accounts for 43% of total energy.

Optionally, the first micro-lens group 21 includes m first micro-lenses 201, the second micro-lens group 22 includes n second micro-lenses 202, and both m and n are positive integers. Different m and n are selected, to change a structure of the first optical structure 20 in each period, and adjust energy distribution in space after a beam is transmitted by the lens, so that the energy distribution is adaptable to a specific scenario.

Similarly, the third micro-lens group 31 includes p third micro-lenses 301, the fourth micro-lens group 32 includes q fourth micro-lenses 302, and both p and q are positive integers. Different p and q are selected, to change a structure of the second optical structure 30 in each period, and adjust energy distribution in space after a beam is transmitted by the lens, so that the energy distribution is adaptable to a specific scenario.

For example, the lens is a symmetrical structure, and the first optical structure 20 and the second optical structure 30 are symmetrical. The lens shown in FIG. 3, the lens shown in FIG. 6, and the lens shown in FIG. 8 are all symmetrical structures. An orthographic projection of the first micro-lens 201 on the second surface 10b overlaps with the third micro-lens 301. An orthographic projection of the second micro-lens 202 on the second surface 10b overlaps with the fourth micro-lens 302. For the lens with the symmetrical structure, two sides of the lens do not need to be distinguished during use. The beam is incident from one side on which the first optical structure 20 is located and is emitted from one side on which the second optical structure 30 is located, or the beam is incident from one side on which the second optical structure 30 is located and is emitted from one side on which the first optical structure 20 is located. In this way, after the beam is transmitted by the lens within a field of view range, luminous intensity in an area close to a center of the field of view range is significantly higher than luminous intensity in an area close to an edge of the field of view range.

In another example, the lens is an asymmetrical structure, and the first optical structure 20 and the second optical structure 30 are not symmetrical. For example, for the orthographic projection of the first micro-lens 201 on the second surface 10b, one part is located inside the third micro-lens 301, and the other part is located outside the third micro-lens 301. For the orthographic projection of the second micro-lens 202 on the second surface 10b, one part is located inside the fourth micro-lens 302, and the other part is located outside the fourth micro-lens 302.

FIG. 10 is a schematic diagram of a structure of a lens according to an embodiment of this application, which is an embodiment according to the claimed subject-matter. As shown in FIG. 10, in the lens, the first optical structure 20 includes a plurality of first micro-lenses 201 and a plurality of second micro-lenses 202. The second optical structure 30 includes a plurality of third micro-lenses 301. The second surface 10b of the lens 10 is a convex surface. The second surface 10b includes a middle area 101, a first slope area 102, and a second slope area 103. The first slope area 102 and the second slope area 103 are located on two sides of the middle area 101. The third micro-lens 301 is located in the middle area 101.

For the lens with a structure, a curvature radius and a clear aperture of the first micro-lens 201, a curvature radius and a clear aperture of the second micro-lens 202, a curvature radius and a clear aperture of the third micro-lens 301, and an arrangement manner may be adjusted, to change energy distribution of a beam in space after the beam is transmitted by the lens. In addition, an included angle between the first slope area 102 and the middle area 101, and an included angle between the second slope area 103 and the middle area 101 may be adjusted, to change the energy distribution of the beam in space after the beam is transmitted by the lens.

Optionally, the included angle between the second slope area 103 and the middle area 101 is the same as the included angle between the first slope area 102 and the middle area 101. The second optical structure 30 and two slop areas are symmetrically distributed, so that when the beam is transmitted from one side on which the second optical structure 30 is located, the energy distribution of the beam within a field of view range is also symmetrical.

It can be seen from FIG. 5, FIG. 7, and FIG. 9 that after the beam is transmitted by the lens, the energy distribution of the beam in space suddenly changes in an area. FIG. 5 is used as an example. At a position in which emergent light is 6.1° directly in front of the laser transmission system, a gradient of luminous intensity is large, and within a small range, the luminous intensity changes from a 1.6e5 W/cm$^2$/solid angle to a 8e4 W/cm$^2$/solid angle. For the lens shown in FIG. 10, the first slope area 102 and the second slope area 103 enable the energy distribution of the beam in space to change more smoothly after the beam is transmitted by the lens, and the luminous intensity gradually changes. A value of the included angle $\theta_1$ between the first slope area 102 and the middle area 101 and a value of the included angle $\theta_2$ between the second slope area 103 and the middle area 101 may be adjusted, to change the gradient of the luminous intensity of the beam in space after the beam is transmitted by the lens.

As an example, in this embodiment of this application, the curvature radius of the first micro-lens 201 is 0.7 mm, and the clear aperture of the first micro-lens 201 is 0.64 mm. The curvature radius of the second micro-lens 202 is 0.95 mm, and the clear aperture of the second micro-lens 202 is 0.64 mm. A ratio of the curvature radius of the first micro-lens 201 to the curvature radius of the second micro-lens 202 is 0.73, and a ratio of the clear aperture of the first micro-lens 201 to the clear aperture of the second micro-lens 202 is 1. In addition, the following relationship is met:

$$N \times R_1 / [L_1 \times (N-1)] = 0.72 \quad (13),$$

where
N is a refractive index of the lens, and $L_1$ is a thickness of the lens at the first micro-lens 201.

The curvature radius of the third micro-lens 301 is 0.7 mm, and the clear aperture of the third micro-lens 301 is 0.64 mm. The included angle $\theta_1$ between the first slope area 102 and the middle area 101 and the included angle $\theta_2$ between the second slope area 103 and the middle area 101 are both 8°. In addition, in this embodiment of this disclosure, both the included angle $\theta_1$ between the first slope area 102 and the middle area 101 and the included angle $\theta_2$ between the second slope area 103 and the middle area 101 are positive values. Both the first slope area 102 and the second slope area 103 are located on one side of the middle area 101 close to the first surface 10a. In another example, both the included angle $\theta_1$ between the first slope area 102 and the middle area 101 and the included angle $\theta_2$ between the second slope area 103 and the middle area 101 may alternatively be negative values. The first slope area 102 and the second slope area 103 are located on one side of the middle area 101 away from the first surface 10a.

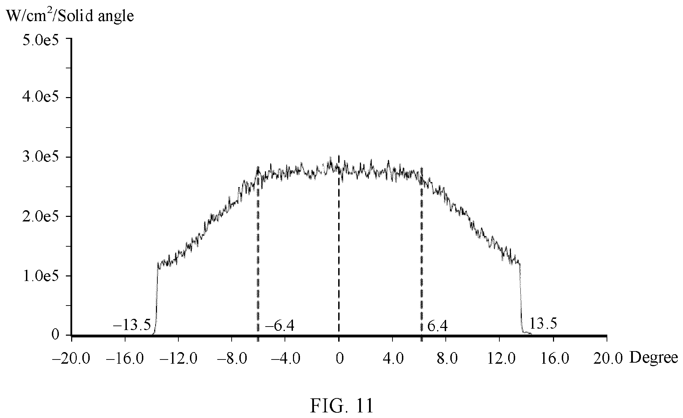

FIG. 11 is a diagram of a luminous intensity distribution curve of emergent light of a laser transmission system according to an embodiment of this application. The laser transmission system includes the lens shown in FIG. 10. A divergent beam is incident from one side on which the first optical structure 20 is located and is emitted from one side on which the second optical structure 30 is located. As shown in FIG. 11, after the beam is transmitted by the lens, energy is distributed within an angle range of 13.5° in front of the laser transmission system, and luminous intensity inside an angle range of 6.4° in front of the laser transmission system is greater than luminous intensity outside the angle range of 6.4° in front of the laser transmission system. A full field of view is 27°, a central field of view is 12.8°, and a ratio of the central field of view to the full field of view is 0.47. Energy in the central field of view accounts for 28% of total energy. It can be seen from FIG. 11 that luminous intensity gradually changes in an area outside the central field of view.

For the lens shown in FIG. 1 to FIG. 11, the lens 10 includes one lens, and the first optical structure 20 and the second optical structure 30 are located on opposite sides of a same lens. In some examples, the lens 10 may alternatively include two lenses.

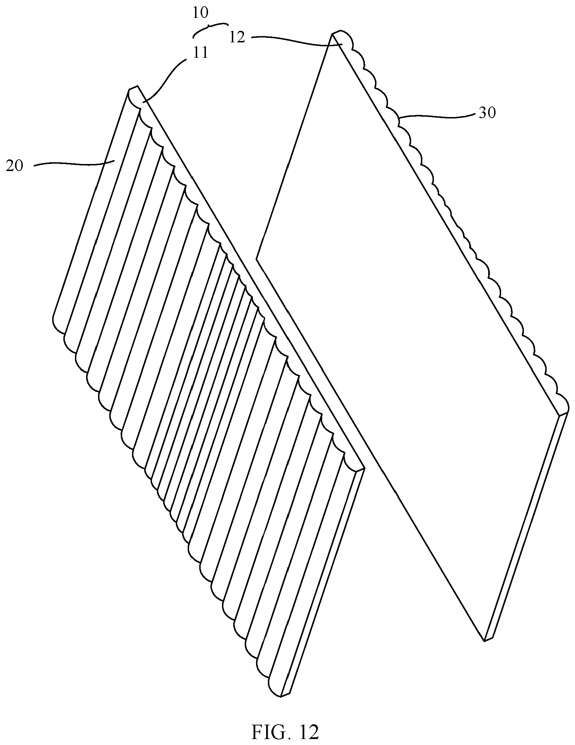

FIG. 12 is a schematic diagram of a structure of a lens according to an embodiment of this application. As shown in FIG. 12, the lens 10 includes a first lens 11 and a second lens 12. The first lens 11 is disposed opposite to the second lens 12. A surface that is of the first lens 11 and that is opposite to the second lens 12 is the first surface 10a, and a surface that is of the second lens 12 and that is opposite to the first lens 11 is the second surface 10b. The first lens 11 includes the first optical structure 20, and the second lens 12 includes the second optical structure 30.

When the lens is used, different first lenses 11 and different second lenses 12 may be selected for combination based on a requirement, so that energy distribution of a beam satisfies a specific application scenario after the beam is transmitted by the lens. In addition, a gap between the first lens 11 and the second lens 12 may alternatively be adjusted to change the energy distribution of the beam in space after the beam is transmitted by the lens.

In an example, in the first optical structure 20 of the lens, a curvature radius of the first micro-lens 201 is 0.65 mm, and a clear aperture of the first micro-lens 201 is 0.26 mm. A curvature radius of the second micro-lens 202 is 0.7 mm, and a clear aperture of the second micro-lens 202 is 0.61 mm. A ratio of the curvature radius of the first micro-lens 201 to the curvature radius of the second micro-lens 202 is 0.93, and a ratio of the clear aperture of the first micro-lens 201 to the clear aperture of the second micro-lens 202 is 0.42. A curvature radius of the third micro-lens 301 is 0.65 mm, and a clear aperture of the third micro-lens 301 is 0.26 mm. The curvature radius of the third micro-lens 301 and the clear aperture of the third micro-lens 301 are respectively the same as the curvature radius of the first micro-lens 201 and the clear aperture of the first micro-lens 201. A curvature radius of the fourth micro-lens 302 is 0.7 mm, and a clear aperture of the fourth micro-lens 302 is 0.61 mm. The curvature radius of the fourth micro-lens 302 and the clear aperture of the fourth micro-lens 302 are respectively the same as the curvature radius of the fourth micro-lens 302 and the clear aperture of the fourth micro-lens 302.

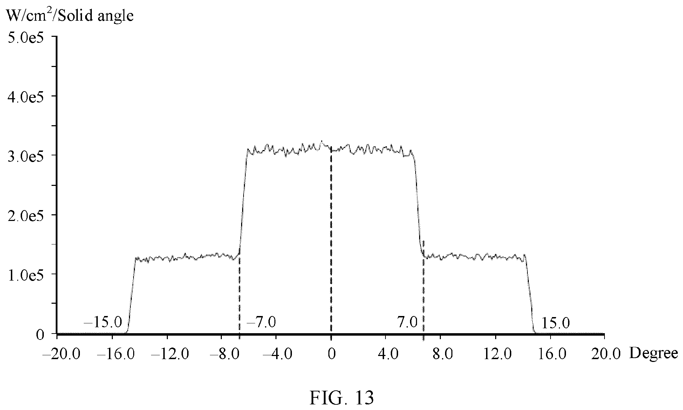

The first lens 11 is placed opposite to the second lens 12. A distance between the first lens 11 and the second lens 12 is adjusted, so that a thickness of the lens satisfies a relational expression (9) and a relational expression (10). In this case, the thickness of the lens includes a thickness of the first lens 11, a thickness of the second lens 12, and a width of the gap between the first lens 11 and the second lens 12. A divergent beam is incident from one side on which the first optical structure 20 is located to the first lens 11, and is emitted from one side on which the second optical structure 30 is located. FIG. 13 is a diagram of a luminous intensity distribution curve of emergent light of a laser transmission system according to an embodiment of this application. The laser transmission system includes the lens shown in FIG. 13. As shown in FIG. 13, after a beam is transmitted by the lens, energy is distributed within an angle range of 15° in front of the laser transmission system, and luminous intensity inside an angle range of 7° in front of the laser transmission system is significantly greater than luminous intensity outside the angle range of 7° in front of the laser transmission system. A full field of view is 30°, a central field of view is 14°, and a ratio of the central field of view to the full field of view is 0.47. Energy in the central field of view accounts for 43% of total energy.

In the lens shown in FIG. 12, the first optical structure 20 is the same as the first optical structure 20 of the lens shown in FIG. 3, the second optical structure 30 is the same as the second optical structure 30 of the lens shown in FIG. 3, and the thickness of the lens shown in FIG. 12 is also the same as the thickness of the lens shown in FIG. 3. In comparison with the diagram of the luminous intensity distribution curve of the emergent light, adjustment of the energy distribution of the beam by two lenses is basically the same. Functions of the two lenses are exactly the same regardless of effect of an error.

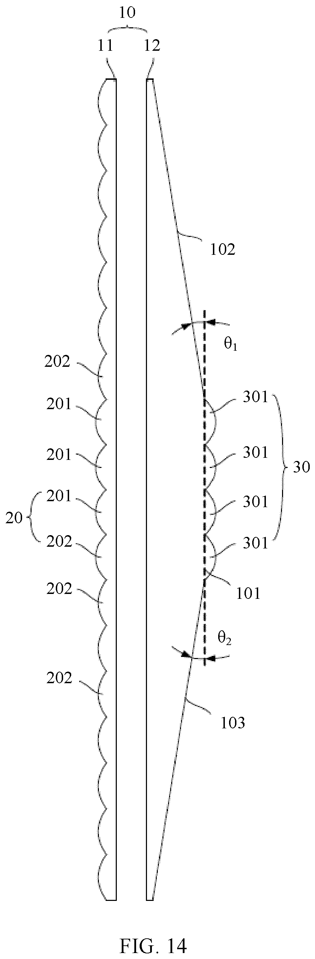

FIG. 14 is a schematic diagram of a structure of a lens according to an embodiment of this application, which is an embodiment according to the claimed subject-matter. As shown in FIG. 14, the lens 10 may also include the first lens 11 and the second lens 12. The first lens 11 includes the first optical structure 20. In the first optical structure 20, a curvature radius of the first micro-lens 201 is 0.7 mm, and a clear aperture of the first micro-lens 201 is 0.64 mm. A curvature radius of the second micro-lens 202 is 0.95 mm, and a clear aperture of the second micro-lens 202 is 0.64 mm. A ratio of the curvature radius of the first micro-lens 201 to the curvature radius of the second micro-lens 202 is 0.73, and a ratio of the clear aperture of the first micro-lens 201 to the clear aperture of the second micro-lens 202 is 1. The first optical structure 20 is the same as the first optical structure 20 of the lens shown in FIG. 10.

The second lens 12 includes the second optical structure 30. The second optical structure 30 includes the third micro-lens 301. A curvature radius of the third micro-lens 301 is 0.7 mm, and a clear aperture of the third micro-lens 301 is 0.64 mm. The second optical structure 30 is the same as the second optical structure 30 of the lens shown in FIG. 10. The second surface 10b, namely, one surface on which the second lens 12 includes the second optical structure 30, of the lens is also a convex surface. An included angle $\theta_1$ between the first slope area 102 and the middle area 101 and an included angle $\theta_2$ between the second slope area 103 and the middle area 101 are both 8°.

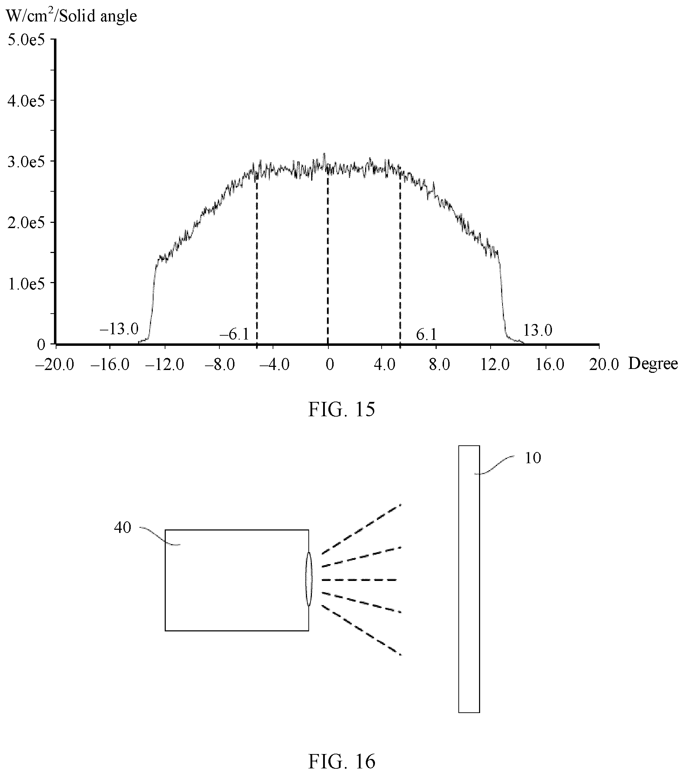

FIG. 15 is a diagram of a luminous intensity distribution curve of emergent light of a laser transmission system according to an embodiment of this application. The laser transmission system includes the lens shown in FIG. 14. A divergent beam is incident from one side on which the first optical structure 20 is located and is emitted from one side on which the second optical structure 30 is located. As shown in FIG. 15, after the beam is transmitted by the lens, energy is distributed within an angle range of 13° in front of the laser transmission system, and luminous intensity inside an angle range of 6.1° in front of the laser transmission system is greater than luminous intensity outside the angle range of 6.1° in front of the laser transmission system. A full field of view is 26°, a central field of view is 12.2°, and a ratio of the central field of view to the full field of view is 0.47. Energy in the central field of view accounts for 28% of total energy. In comparison with the diagram of the luminous intensity distribution curve of the emergent light, adjustment of the energy distribution of the beam by the two lenses is basically the same. Functions of the two lenses are exactly the same regardless of effect of an error.

The first lens 11 and/or the second lens 12 are/is replaced, for example, the first lens 11 is replaced with the lens with the first optical structure 20 shown in FIG. 6, and the second lens 12 is replaced with the lens with the second optical structure 30 shown in FIG. 6, to obtain a lens with a same function as the lens shown in FIG. 6. The first lens 11 and the second lens 12 that include different optical structures can be arbitrarily combined as long as the energy distribution of the beam satisfies a requirement.

An embodiment of this application further provides a laser transmission system. The laser transmission system may be, but is not limited to, a laser transmission system in a lidar or a TOF camera.

FIG. 16 is a schematic diagram of a structure of a laser transmission system according to an embodiment of this application. As shown in FIG. 16, the laser transmission system includes a light source 40 and the lens 10. The lens is any lens shown in FIG. 1 to FIG. 15. The light source 40 is located on one side that is of the first optical structure 20 of the lens 10 and that is away from the second optical structure 30.

When a beam emitted from the light source is transmitted by the lens, energy distribution of the beam in space is sequentially adjusted by the first optical structure and the second optical structure, so that within a field of view range, luminous intensity in an area close to a center of the field of view range is high, and luminous intensity in an area close to an edge of the field of view range is low. Most energy is centralized in the area close to the center. This helps improve energy usage of the light source and reduce energy waste.

An embodiment of this application further provides an electronic device. The electronic device may be, but is not limited to, an electronic device with a ranging capability, for example, a lidar or a TOF camera. The electronic device includes the laser transmission system and a processor shown in FIG. 16. The laser transmission system is used to transmit laser in a target direction. The processor is configured to determine a distance between a target object located in the target direction and the laser transmission system. For example, in an autonomous driving vehicle, the target direction may be in front of a vehicle, and the target object may be another vehicle. The electronic device can be configured to determine a distance between another vehicle appearing in front of the vehicle and the vehicle, so as to help control the vehicle to perform operations such as obstacle avoidance.

Unless otherwise defined, a technical term or a scientific term used herein should have a general meaning understood by a person of ordinary skill in the art of this application. In the specification and claims of the patent application of this application, the terms "first", "second", "third", and the like are not intended to indicate any order, quantity, or significance, but are intended to distinguish between different components. Likewise, "a/an", "one", or the like is not intended to indicate a quantity limitation either, but is intended to indicate existing at least one. Similar words such as "include" or "have" mean that elements or articles preceding "include" or "have" cover elements or articles enumerated after "include" or "have" and their equivalents, and do not exclude other elements or articles. "Connection", "link" or the like is not limited to a physical or mechanical connection, but may include an electrical connection, whether directly or indirectly. "Up", "down", "left", "right", "top", "bottom", and the like are only used to indicate a relative location relationship, and when an absolute location of a described object changes, the relative location relationship may also change accordingly.

The foregoing descriptions are merely embodiments of this application, but are not intended to limit this application.

**Claims**

1. A lens, wherein the lens (10) comprises a first surface (10a) and a second surface (10b) that are opposite to each other, the first surface (10a) has a first optical structure (20), the first optical structure (20) comprises at least a plurality of first micro-lenses (201) and at least a plurality of second micro-lenses (202), wherein:

   o both, the first micro-lenses (201) and the second micro-lenses (202), are cylindrical lenses,
   o an axial meridian $(m_1)$ of the first micro-lenses (201) is parallel to an axial meridian $(m_2)$ of the second micro-lenses (202), and the first micro-lenses (201) and the second micro-lenses (202) differ in at least one of the following parameters:

      - a curvature radius; and
      - a clear aperture; and

   o the second surface (10b) has a second optical structure (30), wherein the second optical structure (30) comprises a plurality of third micro-lenses (301), wherein the third micro-lenses (301) are cylindrical lenses, and an axial meridian $(m_3)$ of the third micro-lenses (301) is parallel to the axial meridian $(m_1)$ of the first micro-lenses (201), wherein the second surface (10b) is a convex surface, the second surface (10b) comprises a middle area (101), a first slope area (102), and a second slope area (103), the first slope area (102) and the second slope area (103) are located on two sides of the middle area (101), and the third micro-lenses (301) are located in the middle area (101), wherein an included angle between the second slope area (103) and the middle area (101) is the same as an included angle between the first slope area (102) and the middle area (101).

2. The lens according to claim 1, wherein the plurality of first micro-lenses (201) are located in the middle of the first surface (10a), and the plurality of second micro-lenses (202) are located on two sides of the plurality of first micro-lenses (201).

3. The lens according to claim 1, wherein the first optical structure (20) comprises a plurality of first micro-lens groups (21) and a plurality of second micro-lens groups (22), the first micro-lens groups (21) and the second micro-lens groups (22) are alternately distributed in a first direction (A), and the first direction (A) is a direction perpendicular to the axial meridian $(m_1)$ of the first micro-lenses (201); and the first micro-lens groups (21) comprises m first micro-lenses (201), the second micro-lens groups (22) comprises n second micro-lenses (202), and both m and n are positive integers.

4. The lens according to any one of claims 1 to 3, wherein a clear aperture of the first micro-lenses (201) and a clear aperture of the second micro-lenses (202) satisfy the following relationship:

$$0.1 \le D_1/D_2 \le 10 ,$$

   , wherein
   $D_1$ is the clear aperture of the first micro-lenses (201), and $D_2$ is the clear aperture of the second micro-lenses (202).

5. The lens according to any one of claims 1 to 4, wherein a curvature radius of the third micro-lenses (301) and the curvature radius of the first micro-lenses (201) satisfy the following relationship:

$$0.1 \le |R_3/R_1| \le 10,$$

   wherein
   $R_1$ is the curvature radius of the first micro-lenses (201), and $R_3$ is the curvature radius of the third micro-lenses (301).

6. The lens according to any one of claims 1 to 5, wherein a clear aperture of the third micro-lenses (301) and the clear aperture of the first micro-lenses (201) satisfy the following relationship:

$$0.1 \le D_3/D_1 \le 10,$$

   wherein
   $D_1$ is the clear aperture of the first micro-lenses (201), and $D_3$ is the clear aperture of the third micro-lenses (301).

7. The lens according to any one of claims 1 to 6, wherein the second optical structure (30) further comprises a plurality of fourth micro-lenses (302), the fourth micro-lenses (302) are cylindrical lenses, an axial meridian $(m_4)$ of the fourth micro-lenses (302) is parallel to the axial meridian $(m_3)$ of the third micro-lenses (301), and the third micro-lenses (301) and the fourth micro-lenses (302) differ in at least one of the following parameters:

   - the curvature radius; and
   - the clear aperture.

8. The lens according to claim 7, wherein the plurality of third micro-lenses (301) are located in the middle of the second surface (10b), and the plurality of fourth micro-lenses (302) are located on two sides of the plurality of third micro-lenses (301).

9. The lens according to claim 7, wherein the second optical structure (30) comprises a plurality of third micro-lens groups (31) and a plurality of fourth micro-lens groups (32), the third micro-lens groups (31) and the fourth micro-lens groups (32) are alternately distributed in a second direction (B), and the second direction (B) is a direction perpendicular to the axial meridian ($m_3$) of the third micro-lenses (301); and the third micro-lens groups (31) comprises p third micro-lenses (301), the fourth micro-lens groups (32) comprises q fourth micro-lenses (302), and both p and q are positive integers.

10. The lens according to any one of claims 7 to 9, wherein the lens (10) satisfies at least one of the following relationships:

$$0.3 \le N \times R_1 / [L_1 \times (N-1)];$$

and

$$0.3 \le N \times R_2 / [L_2 \times (N-1)],$$

wherein
N is a refractive index of the lens (10), $L_1$ is a thickness of the lens (10) at the first micro-lenses (201), $L_2$ is a thickness of the lens (10) at the second micro-lenses (202), $R_1$ is the curvature radius of the first micro-lenses (201), and $R_2$ is the curvature radius of the second micro-lenses (202).

11. The lens according to any one of claims 1 to 10, wherein the lens (10) comprises a first lens (11) and a second lens (12), the first lens (11) is disposed opposite to the second lens (12), a surface that is of the first lens (11) and that is opposite to the second lens (12) is the first surface (10a), and a surface that is of the second lens (12) and that is opposite to the first lens (11) is the second surface (10b).

12. A laser transmission system comprising a light source (40) and the lens (10) according to any one of claims 1 to 11, wherein the light source (40) is located on one side that is of a first optical structure (20) and that is away from a second optical structure (30).

13. An electronic device comprising the laser transmission system according to claim 12, and a processor, wherein the laser transmission system is used to transmit laser in a target direction, and the processor is configured to determine a distance between a target object located in the target direction and the laser transmission system.

**Patentansprüche**

1. Linse, wobei die Linse (10) eine erste Oberfläche (10a) und eine zweite Oberfläche (10b) umfasst, die einander gegenüberliegen, die erste Oberfläche (10a) eine erste optische Struktur (20) aufweist, die erste optische Struktur (20) mindestens eine Vielzahl von ersten Mikrolinsen (201) und mindestens eine Vielzahl von zweiten Mikrolinsen (202) umfasst, wobei:

o sowohl die ersten Mikrolinsen (201) als auch die zweiten Mikrolinsen (202) Zylinderlinsen sind,
o ein axialer Meridian ($m_1$) der ersten Mikrolinsen (201) parallel zu einem axialen Meridian ($m_2$) der zweiten Mikrolinsen (202) ist und sich die ersten Mikrolinsen (201) und die zweiten Mikrolinsen (202) in mindestens einem der folgenden Parameter unterscheiden:

einem Krümmungsradius; und
einer freien Öffnung; und

o die zweite Oberfläche (10b) eine zweite optische Struktur (30) aufweist, wobei die zweite optische Struktur (30) eine Vielzahl von dritten Mikrolinsen (301) umfasst, wobei die dritten Mikrolinsen (301) Zylinderlinsen sind, und ein axialer Meridian ($m_3$) der dritten Mikrolinsen (301) parallel zu dem axialen Meridian ($m_1$) der ersten Mikrolinsen (201) ist, wobei die zweite Oberfläche (10b) eine konvexe Oberfläche ist, die zweite Oberfläche (10b) einen mittleren Bereich (101), einen ersten Neigungsbereich (102) und einen zweiten Neigungsbereich (103) umfasst, der erste Neigungsbereich (102) und der zweite Neigungsbereich (103) auf zwei Seiten des mittleren Bereichs (101) gelegen sind und die dritten Mikrolinsen (301) in dem mittleren Bereich (101) gelegen sind, wobei ein eingeschlossener Winkel zwischen dem zweiten Neigungsbereich (103) und dem mittleren Bereich (101) der gleiche ist wie ein eingeschlossener Winkel zwischen dem ersten Neigungsbereich (102) und dem mittleren Bereich (101).

2. Linse nach Anspruch 1, wobei die Vielzahl von ersten Mikrolinsen (201) in der Mitte der ersten Oberfläche (10a) gelegen ist und die Vielzahl von zweiten Mikrolinsen (202) auf zwei Seiten der Vielzahl von ersten Mikrolinsen (201) gelegen ist.

3. Linse nach Anspruch 1, wobei die erste optische Struktur (20) eine Vielzahl von ersten Mikrolinsengruppen (21) und eine Vielzahl von zweiten Mikrolinsengruppen (22) umfasst, die ersten Mikrolinsengruppen (21) und die zweiten Mikrolinsengruppen (22) abwechselnd in einer ersten Richtung (A) verteilt sind und die erste Richtung (A) eine Richtung senkrecht zu dem axialen Meridian $(m_1)$ der ersten Mikrolinsen (201) ist;
und
die ersten Mikrolinsengruppen (21) m erste Mikrolinsen (201) umfassen, die zweiten Mikrolinsengruppen (22) n zweite Mikrolinsen (202) umfassen und sowohl m als auch n positive ganze Zahlen sind.

4. Linse nach einem der Ansprüche 1 bis 3, wobei eine freie Öffnung der ersten Mikrolinsen (201) und eine freie Öffnung der zweiten Mikrolinsen (202) die folgende Beziehung erfüllen:

$$0,1 \leq D_1/D_2 \leq 10,$$

wobei
$D_1$ die freie Öffnung der ersten Mikrolinsen (201) ist und $D_2$ die freie Öffnung der zweiten Mikrolinsen (202) ist.

5. Linse nach einem der Ansprüche 1 bis 4, wobei ein Krümmungsradius der dritten Mikrolinsen (301) und der Krümmungsradius der ersten Mikrolinsen (201) die folgende Beziehung erfüllen:

$$0,1 \leq |R_3/R_1| \leq 10,$$

wobei
$R_1$ der Krümmungsradius der ersten Mikrolinsen (201) ist und $R_3$ der Krümmungsradius der dritten Mikrolinsen (301) ist.

6. Linse nach einem der Ansprüche 1 bis 5, wobei eine freie Öffnung der dritten Mikrolinsen (301) und die freie Öffnung der ersten Mikrolinsen (201) die folgende Beziehung erfüllen:

$$0,1 \leq D_3/D_1 \leq 10,$$

wobei
$D_1$ die freie Öffnung der ersten Mikrolinsen (201) ist und $D_3$ die freie Öffnung der dritten Mikrolinsen (301) ist.

7. Linse nach einem der Ansprüche 1 bis 6, wobei die zweite optische Struktur (30) ferner eine Vielzahl von vierten Mikrolinsen (302) umfasst, die vierten Mikrolinsen (302) Zylinderlinsen sind, ein axialer Meridian $(m_4)$ der vierten Mikrolinsen (302) parallel zu dem axialen Meridian $(m_3)$ der dritten Mikrolinsen (301) ist und sich die dritten Mikrolinsen (301) und die vierten Mikrolinsen (302) in mindestens einem der folgenden Parameter unterscheiden:

   dem Krümmungsradius; und
   der freien Öffnung.

8. Linse nach Anspruch 7, wobei die Vielzahl von dritten Mikrolinsen (301) in der Mitte der zweiten Oberfläche (10b) gelegen ist und die Vielzahl von vierten Mikrolinsen (302) auf zwei Seiten der Vielzahl von dritten Mikrolinsen (301) gelegen ist.

9. Linse nach Anspruch 7, wobei die zweite optische Struktur (30) eine Vielzahl von dritten Mikrolinsengruppen (31) und eine Vielzahl von vierten Mikrolinsengruppen (32) umfasst, die dritten Mikrolinsengruppen (31) und die vierten Mikrolinsengruppen (32) abwechselnd in einer zweiten Richtung (B) verteilt sind und die zweite Richtung (B) eine Richtung senkrecht zu dem axialen Meridian $(m_3)$ der dritten Mikrolinsen (301) ist; und
die dritten Mikrolinsengruppen (31) p dritte Mikrolinsen (301) umfassen, die vierten Mikrolinsengruppen (32) q vierte Mikrolinsen (302) umfassen und sowohl p als auch q positive ganze Zahlen sind.

10. Linse nach einem der Ansprüche 7 bis 9, wobei die Linse (10) mindestens eine der folgenden Beziehungen erfüllt:

$$0,3 \leq N \times R_1/[L_1 \times (N - 1)];$$

und

$$0,3 \leq N \times R_2/[L_2 \times (N - 1)],$$

wobei
N ein Brechungsindex der Linse (10) ist, $L_1$ eine Dicke der Linse (10) an den ersten Mikrolinsen (201) ist, $L_2$ eine Dicke der Linse (10) an den zweiten Mikrolinsen (202) ist, $R_1$ der Krümmungsradius der ersten Mikrolinsen (201) ist und $R_2$ der Krümmungsradius der zweiten Mikrolinsen (202) ist.

11. Linse nach einem der Ansprüche 1 bis 10, wobei die Linse (10) eine erste Linse (11) und eine zweite Linse (12) umfasst, die erste Linse (11) gegenüberliegend zu der zweiten Linse (12) angeordnet ist, eine Oberfläche, die zu der ersten Linse (11) gehört und die der zweiten Linse (12) gegenüberliegt, die erste Oberfläche (10a) ist und eine Oberfläche, die zu der zweiten Linse (12) gehört und die der ersten Linse (11) gegenüberliegt, die zweite Oberfläche (10b) ist.

12. Laserübertragungssystem, umfassend eine Lichtquelle (40) und die Linse (10) nach einem der Ansprüche 1 bis 11, wobei die Lichtquelle (40) auf einer Seite gelegen ist, die zu einer ersten optischen Struktur (20) gehört und die von einer zweiten optischen Struktur (30) abgewandt ist.

13. Elektronische Vorrichtung, umfassend das Laserübertragungssystem nach Anspruch 12 und einen Prozessor, wobei das Laserübertragungssystem verwendet wird, um Laser in eine Zielrichtung auszusenden, und der Prozessor konfiguriert ist, um einen Abstand zwischen einem in der Zielrichtung gelegenen Zielobjekt und dem Laserübertragungssystem zu bestimmen.

**Revendications**

1. Lentille, dans laquelle la lentille (10) comprend une première surface (10a) et une seconde surface (10b) opposées l'une à l'autre, la première surface (10a) comporte une première structure optique (20), la première structure optique (20) comprend au moins une pluralité de premières microlentilles (201) et au moins une pluralité de deuxièmes microlentilles (202), dans laquelle :

   o les premières microlentilles (201) et les deuxièmes microlentilles (202) sont toutes deux des lentilles cylindriques,
   o un méridien axial ($m_1$) des premières microlentilles (201) est parallèle à un méridien axial ($m_2$) des deuxièmes microlentilles (202), et les premières microlentilles (201) et les deuxièmes microlentilles (202) diffèrent par au moins un des paramètres suivants :

      - un rayon de courbure ; et
      - une ouverture dégagée ; et

   o la seconde surface (10b) comporte une seconde structure optique (30), dans laquelle la seconde structure optique (30) comprend une pluralité de troisièmes microlentilles (301), dans laquelle les troisièmes microlentilles (301) sont des lentilles cylindriques, et un méridien axial ($m_3$) des troisièmes microlentilles (301) est parallèle au méridien axial ($m_1$) des premières microlentilles (201), dans laquelle la seconde surface (10b) est une surface convexe, la seconde surface (10b) comprend une zone centrale (101), une première zone inclinée (102) et une seconde zone inclinée (103), la première zone inclinée (102) et la seconde zone inclinée (103) sont situées de part et d'autre de la zone centrale (101), et les troisièmes microlentilles (301) sont situées dans la zone centrale (101), dans laquelle un angle inclus entre la seconde zone inclinée (103) et la zone centrale (101) est le même qu'un angle inclus entre la première zone inclinée (102) et la zone centrale (101).

2. Lentille selon la revendication 1, dans laquelle la pluralité de premières microlentilles (201) sont situées au milieu de la première surface (10a), et la pluralité de deuxièmes microlentilles (202) sont situées de part et d'autre de la pluralité de premières microlentilles (201).

3. Lentille selon la revendication 1, dans laquelle la première structure optique (20) comprend une pluralité de premiers groupes de microlentilles (21) et une pluralité de deuxièmes groupes de microlentilles (22), les premiers groupes de microlentilles (21) et les deuxièmes groupes de microlentilles (22) sont répartis alternativement dans une première direction (A), et la première direction (A) est une direction perpendiculaire au méridien axial ($m_1$) des premières microlentilles (201) ;
   et
   les premiers groupes de microlentilles (21) comprennent m premières microlentilles (201), les deuxièmes groupes de microlentilles (22) comprennent n deuxièmes microlentilles (202), et m et n sont tous deux des entiers positifs.

4. Lentille selon l'une quelconque des revendications 1 à 3, dans laquelle une ouverture dégagée des premières microlentilles (201) et une ouverture dégagée des deuxièmes microlentilles (202) satisfont la relation suivante :

$$0,1 \leq D_1/D_2 \leq 10,$$

   dans laquelle
   $D_1$ est l'ouverture dégagée des premières microlentilles (201), et $D_2$ est l'ouverture dégagée des deuxièmes microlentilles (202).

5. Lentille selon l'une quelconque des revendications 1 à 4, dans laquelle le rayon de courbure des troisièmes microlentilles (301) et le rayon de courbure des premières microlentilles (201) satisfont la relation suivante :

$$0,1 \leq |R_3/R_1| \leq 10,$$

   dans laquelle
   $R_1$ est le rayon de courbure des premières microlentilles (201), et $R_3$ est le rayon de courbure des troisièmes microlentilles (301).

6. Lentille selon l'une quelconque des revendications 1 à 5, dans laquelle une ouverture dégagée des troisièmes microlentilles (301) et une ouverture dégagée des premières microlentilles (201) satisfont la relation suivante :

$$0,1 \leq D_3/D_1 \leq 10,$$

dans laquelle
$D_1$ est l'ouverture dégagée des premières microlentilles (201), et $D_3$ est l'ouverture dégagée des troisièmes microlentilles (301).

7. Lentille selon l'une quelconque des revendications 1 à 6, dans laquelle la seconde structure optique (30) comprend également une pluralité de quatrièmes microlentilles (302), les quatrièmes microlentilles (302) sont des lentilles cylindriques, un méridien axial ($m_4$) des quatrièmes microlentilles (302) est parallèle au méridien axial ($m_3$) des troisièmes microlentilles (301), et les troisièmes microlentilles (301) et les quatrièmes microlentilles (302) diffèrent par au moins un des paramètres suivants :

    - le rayon de courbure ; et
    - l'ouverture dégagée.

8. Lentille selon la revendication 7, dans laquelle la pluralité de troisièmes microlentilles (301) sont situées au milieu de la seconde surface (10b), et la pluralité de quatrièmes microlentilles (302) sont situées de part et d'autre de la pluralité de troisièmes microlentilles (301).

9. Lentille selon la revendication 7, dans laquelle la seconde structure optique (30) comprend une pluralité de troisièmes groupes de microlentilles (31) et une pluralité de quatrièmes groupes de microlentilles (32), les troisièmes groupes de microlentilles (31) et les quatrièmes groupes de microlentilles (32) sont répartis alternativement dans une seconde direction (B), et la seconde direction (B) est une direction perpendiculaire au méridien axial ($m_3$) des troisièmes microlentilles (301) ; et
les troisièmes groupes de microlentilles (31) comprennent p troisièmes microlentilles (301), les quatrièmes groupes de microlentilles (32) comprennent q quatrièmes microlentilles (302), et p et q sont tous deux des entiers positifs.

10. Lentille selon l'une quelconque des revendications 7 à 9, dans laquelle la lentille (10) satisfait au moins une des relations suivantes :

$$0,3 \leq N \times R_1/[L_1 \times (N - 1)] \; ;$$

et

$$0,3 \leq N \times R_2/[L_2 \times (N - 1)],$$

dans laquelle
N est l'indice de réfraction de la lentille (10), $L_1$ est l'épaisseur de la lentille (10) au niveau des premières microlentilles (201), $L_2$ est l'épaisseur de la lentille (10) au niveau des deuxièmes microlentilles (202), $R_1$ est le rayon de courbure des premières microlentilles (201) et $R_2$ est le rayon de courbure des deuxièmes microlentilles (202).

11. Lentille selon l'une quelconque des revendications 1 à 10, dans laquelle la lentille (10) comprend une première lentille (11) et une seconde lentille (12), la première lentille (11) est disposée à l'opposé de la seconde lentille (12), une surface qui appartient à la première lentille (11) et qui est opposée à la seconde lentille (12) est la première surface (10a), et une surface qui appartient à la seconde lentille (12) et qui est opposée à la première lentille (11) est la seconde surface (10b).

12. Système de transmission laser comprenant une source lumineuse (40) et la lentille (10) selon l'une quelconque des revendications 1 à 11, dans lequel la source lumineuse (40) est située sur un côté qui appartient à une première structure optique (20) et qui est éloignée d'une seconde structure optique (30).

13. Dispositif électronique comprenant le système de transmission laser selon la revendication 12 et un processeur, dans lequel le système de transmission laser est utilisé pour transmettre un laser dans une direction cible, et le processeur est configuré pour déterminer une distance entre un objet cible situé dans la direction cible et le système de transmission laser.

FIG. 1

FIG. 2

FIG. 3

FIG. 4

W/cm$^2$/Solid angle

FIG. 5

FIG. 6

FIG. 7

FIG. 8

W/cm²/Solid angle

FIG. 9

FIG. 10

W/cm²/Solid angle

FIG. 11

FIG. 12

FIG. 13

FIG. 14

W/cm²/Solid angle

FIG. 15

FIG. 16

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110902254

- WO 2020088995 A1